# EUROPÄISCHE PATENTSCHRIFT

(11) **EP 3 586 614 B1**
(45) Veröffentlichungstag und Bekanntmachung des Hinweises auf die Patenterteilung: **09.06.2021**
(21) Anmeldenummer: 19182353.3
(22) Anmeldetag: 25.06.2019
(51) Int. Cl.: A01K 15/02, A47F 5/04

(54) **VERBINDUNGSSYSTEM FÜR BAUTEILE IM MÖBEL- ODER MESSEBAU**
CONNECTION SYSTEM FOR MODULAR FURNITURE OR EXHIBITION STANDS
SYSTEME DE CONNECTION POUR MEUBLE MODULAIRE OU STAND DE FOIRE

(30) Priorität: 26.06.2018 DE 202018103629 U
(43) Veröffentlichungstag der Anmeldung: 01.01.2020
(73) Patentinhaber: Thylmann, Carsten, 30171 Hannover (DE)
(72) Erfinder: Thylmann, Carsten, 30171 Hannover (DE)
(74) Vertreter: Fritz, Edmund Lothar

(56) Entgegenhaltungen:
- EP-A1- 3 058 853
- EP-A2- 2 155 016
- DE-A1- 3 606 271
- FR-A1- 2 367 451
- US-A1- 2008 149 042

## Beschreibung

Die vorliegende Erfindung betrifft ein Verbindungssystem für Bauteile im Möbel- oder Messebau, umfassend wenigstens ein Pfostenelement, vorzugsweise zwei etwa miteinander fluchtende und miteinander zu verbindende Pfostenelemente und wenigstens ein mit diesem einen Pfostenelement oder zwei oder mehreren Pfostenelementen zu verbindendes Plattenelement, welches sich etwa orthogonal zu dem(n) Pfostenelement(en) erstreckt, sowie weiterhin umfassend Verbindungsmittel und Befestigungselemente, geeignet, die wenigstens zwei Pfostenelemente miteinander und/oder das wenigstens eine Plattenelement mit einem oder mehreren Pfostenelementen kraftschlüssig zu verbinden, wobei wenigstens ein durchgehendes Verbindungsmittel mit Gewinde sich in Längsrichtung durch wenigstens ein Pfostenelement, vorzugsweise zwei miteinander zu verbindende Pfostenelemente und wenigstens ein Plattenelement hindurch erstreckt und dabei jeweils in einer Bohrung des oder der Pfostenelemente aufgenommen ist und in wenigstens einem der Pfostenelemente eine auf das durchgehende Verbindungsmittel aufschraubbare Distanzmuffe eingelassen ist, welche stirnseitig im Bereich eines der Plattenelemente ein Widerlager hat.

Verbindungssysteme der in der vorliegenden Anmeldung beschriebenen Art kommen beispielsweise im Messebau oder Möbelbau überall dort in Betracht, wo Pfostenelemente mit Plattenelementen zu verbinden sind, wobei die Pfostenelemente sich in der Regel im Wesentlichen vertikal erstrecken, während die Plattenelemente sich in der Regel im Wesentlichen horizontal erstrecken. Diese Anforderung ist beispielsweise gegeben bei Regalkonstruktionen oder anderen Möbeln, bei denen die Pfostenelemente sozusagen das tragende Ständerwerk bilden und die Plattenelemente Ablageflächen bilden, auf denen Gegenstände abgelegt werden können.

Ein nur beispielhaft genannter Anwendungsbereich für Verbindungssysteme der erfindungsgemäßen Art sind Konstruktionen von Kratzbäumen, die jeweils Pfostenelemente und Plattenelemente umfassen, auf denen die Katzen liegen. In der Regel werden solche Kratzbäume aus mehreren Pfostenelementen aufgebaut, die das Ständerwerk bilden und mehrere Plattenelemente werden in verschiedenen Ebenen an den Pfostenelementen angebracht, wobei man variable Gestaltungsformen sucht, um die Kratzbäume für die Tiere abwechslungsreich und im Design interessant zu gestalten. Neben der Verbindung der Plattenelemente mit den Pfostenelementen müssen miteinander fluchtende Pfostenelemente untereinander verbunden werden, da diese Elemente in Höhenrichtung gesehen durch Plattenelemente der einzelnen Liegeebenen unterbrochen sind. Bei herkömmlichen Kratzbäumen erfolgt die Verbindung der miteinander fluchtenden Pfostenelemente, die in der Regel aus Holz bestehen, beispielsweise über in die Pfostenelemente endseitig eingedreht oder eingeklebte Gewindemuffen, in die auf beiden Seiten an den zu verbindenden Pfostenelemente jeweils ein kurzes Gewindestück mit Außengewinde eingeschraubt wird. Diese Art der Verbindung der Pfostenelemente ist jedoch nicht sehr stabil, so dass die Gefahr besteht, dass die Verbindung mit der Zeit Spiel hat oder es sogar bei Belastung der Pfostenelemente durch Querkräfte zum Ausbrechen der Gewindeverbindung aus dem Holz des Pfostenelements kommt.

Aus der FR 2 367 451 A1 ist ein Verbindungssystem für den Möbelbau bekannt, bei dem insbesondere Regale mit vertikalen Pfosten und horizontalen Böden montiert werden, wobei im Bereich der Pfosten jeweils kürzere Rohrhülsen vorgesehen sind, die jeweils zwischen zwei beabstandeten Böden verlaufen und von vertikalen Spindeln durchsetzt werden. Die Rohrhülsen nehmen Muttern auf, die auf das Gewinde der vertikalen Spindeln aufgeschraubt werden, wobei diese Muttern direkt auf den Böden aufliegen, welche offensichtlich aus einem harten Material bestehen, gemäß den Ausführungsbeispielen vermutlich aus Metall. Unterlegscheiben, die auf der den Muttern gegenüberliegenden Fläche der Böden angeordnet sind, dienen lediglich dazu, die Rohrhülsen auf den Spindeln zu zentrieren.

Die EP 3 058 853 A1 beschreibt ein sektionales Möbelstück mit einem vertikalen säulenartigen, lastaufnehmenden Bauteil und wenigstens einem an diesem anbringbaren horizontalen Plattenelement. Im Inneren der Säulen verlaufen Zugstangen, die sich durch Löcher in den blockartigen Säulenelementen hindurch erstrecken und in ihren oberen Bereichen als Gewindestangen ausgebildet sind, auf die blockartige Elemente aufgeschraubt werden können, in die eine Gewindehülse eingesetzt ist. Unterlegscheiben sind hier nicht vorgesehen und wohl deshalb nicht notwendig, weil die blockartigen Elemente, die auf die Spindel aufgeschraubt werden, unterseitig selbst eine große Widerlagerfläche aufweisen.

Hier setzt die vorliegende Erfindung ein. Aufgabe der vorliegenden Erfindung ist es, ein Verbindungssystem für die Verbindung von Bauteilen der eingangs genannten Gattung zur Verfügung zu stellen, welches zu einer Verbindung mit größerer Stabilität und Belastbarkeit führt.

Die Lösung dieser Aufgabe liefert ein erfindungsgemäßes Verbindungssystem für die Verbindung von Bauteilen der eingangs genannten Gattung mit den kennzeichnenden Merkmalen des Hauptanspruchs.

Erfindungsgemäß ist wenigstens eine wenigstens einem der Plattenelemente zugeordnete Unterlegscheibe vorgesehen, die an einer Widerlagerfläche des Plattenelements anliegt, wobei die Unterlegscheibe in einer Aussparung des Plattenelements aufgenommen ist.

Im einfachsten Fall umfasst das erfindungsgemäße Verbindungssystem nur ein Pfostenelement und ein mit diesem zu verbindendes Plattenelement. In komplexeren Fällen ist wenigstens ein Pfosten vorhanden, der aus mehreren miteinander zu verbindenden Pfostenelementen besteht, die miteinander fluchten und die sowohl untereinander als auch mit einem oder mehreren Plattenelementen verbunden werden.

Aufgrund der erfindungsgemäßen Lösung ist es so, dass nicht mehr wie im Stand der Technik, einzelne Pfostenelemente über kurze Gewindeelemente miteinander verschraubt werden, sondern ein durchgehendes Verbindungsmittel mit Gewinde vorgesehen ist, welches sich durch mehrere Pfostenelemente und folglich auch durch die zwischen diesen Pfostenelementen angeordneten Plattenelemente hindurch erstreckt, wobei durch die Distanzmuffe eine kraftschlüssige Verbindung zwischen dem durchgehenden Verbindungsmittel und der Distanzmuffe geschaffen wird. Dies trägt zu einer wesentlichen Erhöhung der Stabilität der gesamten Konstruktion bei. Vorzugsweise ist in mehreren Pfostenelementen eine solche Distanzmuffe angeordnet, so dass ein einziges durchgehendes Verbindungsmittel mit Gewinde gleichzeitig mit mehreren Pfostenelementen verbunden wird. Dadurch wird über das die Pfostenelemente verbindende durchgehende Verbindungsmittel quasi eine gemeinsame statische Einheit eines Pfostens geschaffen.

Gemäß einer bevorzugten Variante der Erfindung ist in einer Bohrung wenigstens eines der Pfostenelemente ein Rohr, vorzugsweise ein Vierkantrohr aufgenommen, welches sich in dem Pfostenelement in Längsrichtung erstreckt, wobei das Rohr das durchgehende Verbindungsmittel aufnimmt. Bei der Fertigung der Elemente für beispielsweise ein Möbelstück kann man so vorgehen, dass man zunächst jeweils ein bevorzugt aus Metall bestehendes Rohr in das Pfostenelement, welches in der Regel aus Holz besteht, einlässt, so dass man dann später bei der Montage des Möbelstücks das Verbindungsmittel, welches beispielsweise eine Gewindestange ist, durch den Hohlraum im Inneren der Rohre mehrerer zu verbindender Pfostenelemente hindurchschieben kann. Auf das genannte Rohr (Vierkantrohr) im Pfostenelement kann aber beispielsweise bei einer günstiger zu produzierenden Variante der Erfindung auch verzichtet werden. In diesem Fall erstreckt sich die Gewindestange unmittelbar durch eine Bohrung in dem Holz des Pfostenelements.

Erfindungsgemäß ist wenigstens eine wenigstens einem der Plattenelemente zugeordnete Unterlegscheibe vorgesehen, die an einer Widerlagerfläche des Plattenelements anliegt. Durch die Unterlegscheibe kann man ein ausreichend großes flächiges Widerlager schaffen und höhere Kräfte übertragen. Die Unterlegscheibe kann einerseits an der Widerlagerfläche des Plattenelements und andererseits an einer stirnseitigen Fläche eines der Pfostenelemente anliegen.

Die Unterlegscheibe ist in einer Aussparung eines der Plattenelemente aufgenommen, so dass sie zwischen Plattenelement und Pfostenelement quasi versenkt angeordnet ist und damit eine größere Fläche des Plattenelements an der Stirnseite des Pfostenelements zur Anlage kommt.

Gemäß einer bevorzugten Weiterbildung der Erfindung kann endseitig auf eines der Enden des Gewindes des durchgehenden Verbindungsmittels eine Kontermutter aufgeschraubt werden. Man kann somit das Verbindungsmittel mit dem Gewindeelement nicht nur durch mehrere Pfostenelemente und Plattenelemente hindurchführen, sondern dieses beispielsweise gegenüber dem obersten Plattenelement noch ein Stück überstehen lassen, so dass auf das Gewinde des Verbindungsmittels, welches insbesondere eine Gewindestange ist, endseitig die Kontermutter aufgeschraubt werden kann, die dann beim Anziehen eine Kraft erzeugt, die die Plattenelemente und Pfostenelemente gegeneinander presst. Unter die Kontermutter kann man wiederum eine metallische Unterlegscheibe legen, so dass eine größere Fläche für die Kraftübertragung auf das Plattenelement und auch eine Fläche mit höherer Druckfestigkeit, im Vergleich zu dem weicheren Holzwerkstoff eines Plattenelements, zur Verfügung steht.

Gemäß einer möglichen konstruktiven Variante kann beispielsweise in wenigstens einem endseitigen Bereich der Verbindung in das Gewinde einer Distanzmuffe eine Schraube mit Außengewinde einschraubbar sein. Man kann bei dieser Variante zum Beispiel eine der Distanzmuffen in doppelter Funktion nutzen, beispielsweise eine Distanzmuffe, die sich in dem untersten Pfostenelement befindet. Zum einen schraubt man das untere Ende der Gewindestange von oben her in die Distanzmuffe ein und von der Unterseite her schraubt man eine Schraube in die Distanzmuffe ein, mittels derer man insbesondere ein Fußelement oder einen Standfuß am unteren Ende des untersten Pfostenelements befestigen kann. Diese Schraube zieht dann im festgezogenen Zustand das Fußelement gegen die Stirnseite des untersten Pfostenelements. Somit kann man durch das durchgehende Verbindungsmittel, bei dem es sich bevorzugt um eine Gewindestange handelt, nicht nur mehrere Pfostenelemente mit mehreren Plattenelementen verbinden, sondern zusätzlich noch ein Fußelement befestigen, auf dem der Pfosten des Möbelelements steht.

Das Fußelement kann ein Plattenelement aus einem Holzwerkstoff sei, welches zusätzlich eine Stahlplatte als Verstärkung aufweist, wodurch man das Gewicht des Fußelements erhöht und die Standfestigkeit des Bauteils verbessert. Die vorgenannte Schraube, die in die Distanzmuffe eingeschraubt wird, kann beispielsweise diese Stahlplatte mit der Gewindestange verbinden. Bei einer kostengünstigeren Variante des erfindungsgemäßen Verbindungssystems kann man aber auch auf die vorgenannte Stahlplatte in dem Fußelement verzichten. Es kann dann beispielsweise eine Holzplatte, die ausreichend breit ist und genügend Eigengewicht hat, als Fußelement dienen.

Gemäß einer Weiterbildung der Erfindung ist wenigstens eine Distanzmuffe in einem der Pfostenelemente in Richtung einer durch Kontern des Verbindungsmittels erzeugten Zugkraft axial unverschiebbar festgelegt. Wenn somit vom einen Ende her das Verbindungsmittel, insbesondere eine Gewindestange über die Kontermutter gekontert wird, dann greift die Gewindestange in das Gewinde der Distanzmuffe ein und zieht die Distanzmuffe gegen ihr Widerlager in dem Pfostenelement in Richtung auf dasjenige Ende der Gewindestange, an dem sich die Kontermutter befindet.

Um die relative Positionierung der Plattenelemente zu den Pfostenelementen mit einfachen Mitteln sicher zu stellen, können gemäß einer bevorzugten Weiterbildung der Erfindung im Bereich der Verbindung wenigstens eines Plattenelements mit wenigstens einem der Pfostenelemente Lamellen angeordnet sein, welche in eine Nut des Plattenelements und in eine mit dieser fluchtende Nut im stirnseitigen Bereich des Pfostenelements einsteckbar sind und sich etwa in Richtung der Normalen zur Oberfläche des Plattenelements erstrecken.

Das erfindungsgemäße Möbel- oder Messebauteil kann Pfosten aus jeweils mehr als zwei Pfostenelementen umfassen, beispielsweise umfasst das Bauteil wenigstens drei miteinander fluchtende und miteinander zu verbindende Pfostenelemente und wenigstens zwei mit diesen Pfostenelementen zu verbindende Plattenelemente, wobei sich die Plattenelemente jeweils etwa orthogonal zu den Pfostenelementen erstrecken und wobei die Plattenelemente vorzugsweise jeweils zwischen den Stirnseiten von jeweils zwei miteinander fluchtenden Pfostenelementen angeordnet sind.

Bei dem erfindungsgemäßen Möbel- oder Messebauteil können die horizontalen Plattenelemente in verschiedenen übereinander liegenden beabstandeten Ebenen angeordnet sein, sie müssen aber keineswegs jeweils in der senkrechten Projektion genau übereinander liegen und sie können unterschiedliche Umriss und unterschiedliche Flächengrößen aufweisen. Beispielsweise kann es bei einer möglichen Anordnung so sei, dass sich wenigstens zwei Plattenelemente des Bauteils von den Pfostenelementen ausgehend zu gegenüberliegenden Seiten hin erstrecken und an den Pfostenelementen jeweils auskragend angeordnet sind. Es kann auch beispielsweise eine alternierende Anordnung vorliegen, so dass jeweils in Höhenrichtung gesehen jedes übernächste Plattenelement zur gleichen Seite hin auskragt, wodurch auch ein gewisser Gewichtsausgleich stattfindet, der das Bauteil stabilisiert.

Gegenstand der vorliegenden Erfindung ist weiterhin ein Möbel- oder Messebauteil umfassend ein Verbindungssystem mit den zuvor beschriebenen Merkmalen.

Gemäß einer besonders bevorzugten Ausführungsvariante der Erfindung handelt es bei dem Möbelbauteil um einen Kratzbaum für Katzen. Derartige Kratzbäume umfassen in der Regel mehrere Plattenelemente, die Liegeebenen bilden und diese Plattenelemente sind häufig an einem oder mehreren Pfostenelementen angebracht, wobei sie von dem vertikalen Pfostenelement ausgehend seitlich auskragen können. Ein derartiger Kratzbaum hat in der Regel Pfosten, die aus mehreren in Höhenrichtung übereinander liegenden, miteinander fluchtenden Pfostenelementen montiert werden, wobei jeweils zwischen je zwei Pfostenelementen jeweils ein Plattenelement angeordnet und verklemmt wird.

Andere bevorzugte Anwendungen des erfindungsgemäßen Verbindungssystems liegen im Bereich von Möbeln beispielsweise im Regalbau, wo ebenfalls häufig Pfostenelemente mit Plattenelementen zu verbinden sind, wobei letztere die Regalböden bilden. Die Erfindung bezieht sich insbesondere auf solche Bauteile, bei denen die Pfostenelemente und/oder die Plattenelemente aus Holzwerkstoffen bestehen, beispielsweise aus massiven Holzteilen, Holzfaserwerkstoffen, Holzlaminat und dergleichen. Die Verbindungsmittel und Befestigungselemente wie Gewindestange, Mehrkantrohr, Distanzmuffe, Muttern, Schrauben und dergleichen bestehen in der Regel aus metallischen Werkstoffen, beispielsweise aus Aluminium oder Stahl.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine vereinfachte Seitenansicht eines beispielhaften Kratzbaums für Katzen gemäß einer Ausführungsvariante der vorliegenden Erfindung in teilweiser Schnittdarstellung;
Figur 2 eine vergrößerte Detailansicht in einem oberen Bereich des Kratzbaums gemäß der Variante der Figur 1;
Figur 3 eine weitere vergrößerte Detailansicht in einem mittleren Bereich des Kratzbaums gemäß der Variante von Figur 1;
Figur 4 eine weitere vergrößerte Detailansicht in einem unteren Bereich des Kratzbaums gemäß der Variante von Figur 1;

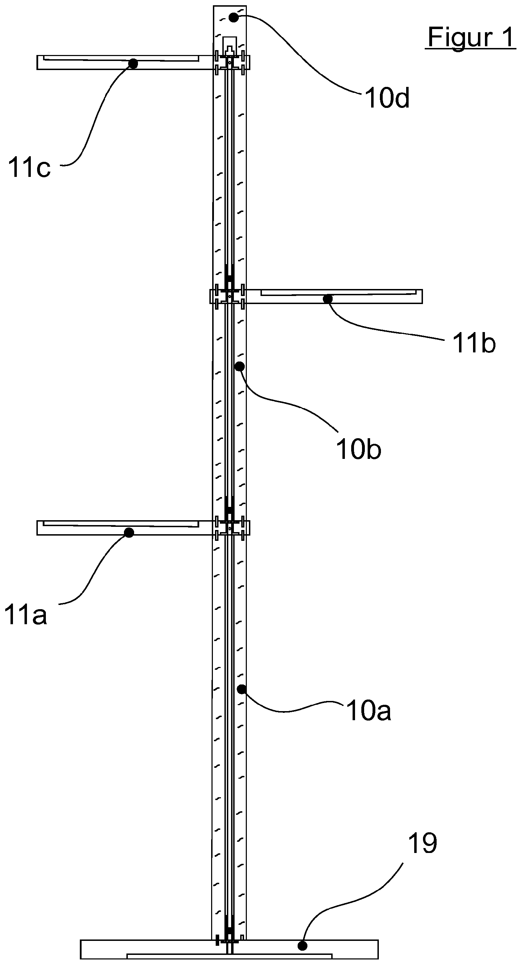

Nachfolgend wird zunächst auf die Figur 1 Bezug genommen und anhand dieser wird ein mögliches Ausführungsbeispiel der vorliegenden Erfindung näher erläutert. Es handelt sich in Figur 1 um einen Kratzbaum für Katzen, welcher üblicherweise aus einem oder mehreren Pfostenelementen (10 a, 10 b, 10 c) sowie mehreren in verschiedenen Ebenen an diesen Pfostenelementen 10 a, 10 b, 10 c angebrachten Plattenelementen 11 a, 11 b besteht. In Figur 1 ist eine ganz einfach Variante eines solchen Kratzbaums dargestellt. Dieser kann auch erheblich aufwändiger konstruiert sein, beispielsweise mit asymmetrischem Aufbau, Höhlen, in denen sich die Katzen aufhalten, Verbindungsstücken zwischen den einzelnen Ebenen, nicht rechtwinklig ausgerichteten Abschnitten oder nicht horizontal verlaufenden Plattenebenen, was aber im Rahmen der vorliegenden Erfindung nicht von Belang ist. Der Kratzbaum gemäß Figur 1 gibt somit nur exemplarisch einen möglichen einfachen Aufbau eines solchen Kratzbaums wieder, da sich die vorliegende Erfindung nicht auf ein spezifisches Design des Kratzbaums bezieht, sondern es vielmehr um die Art der Verbindung der Pfostenelemente 10 a, 10 b 10 c untereinander einerseits sowie die Art der Verbindung der Pfostenelemente mit den Plattenelementen 11 a, 11 b für die diversen Böden, die der Katze Liegeflächen bieten, geht.

Der in Figur 1 beispielhaft dargestellte Kratzbaum umfasst insgesamt drei jeweils übereinander angeordnete und miteinander fluchtende bevorzugt etwa vertikal ausgerichtete Pfostenelemente, nämlich ein unteres Pfostenelement 10 a, ein darüber angeordnetes mittleres Pfostenelement 10 b sowie ein oberes Pfostenelement 10 c. Am unteren Ende des unteren Pfostenelements 10 a hat der Kratzbaum ein seitlich auskragendes Fußelement 19, welches einen Standfuß mit einer Auflage auf dem Untergrund bildet. In Höhenrichtung gesehen weist der Kratzbaum drei jeweils beispielsweise etwa horizontal ausgerichtete Plattenelemente 11 a, 11 b und 11 c auf, wobei ein unteres Plattenelement 11 a mit Abstand zu dem Fußelement 19 weiter oberhalb angeordnet ist. Dieses untere Plattenelement 11 a kragt wie man sieht von dem Pfosten ausgehend einseitig zu einer Seite hin aus. Außerdem ist das untere Plattenelement 11 a so an dem Pfosten befestigt, dass es in seinem Endbereich zwischen dem oberen Ende des unteren Pfostenelements 10 a und dem unteren Ende des mittleren Pfostenelements 10 b aufgenommen ist, das heißt das Plattenelement 11 a ist endseitig zwischen diese beiden Pfostenelemente 10 a und 10 b eingeschoben.

Mit Abstand oberhalb des unteren Plattenelements 11 a ist an dem Pfosten ein zweites, mittleres Plattenelement 11 b befestigt, welches auch etwa horizontal ausgerichtet ist, aber im Vergleich zu dem unteren Plattenelement 11 a von dem Pfosten ausgehend zur gegenüberliegenden Seite hin einseitig auskragt. Das mittlere Plattenelement 11 b ist so an dem Pfosten befestigt, dass es in seinem Endbereich zwischen dem oberen Ende des mittleren Pfostenelements 10 b und dem unteren Ende des oberen Pfostenelements 10 c aufgenommen ist, das heißt das Plattenelement 11 b ist endseitig zwischen diese beiden Pfostenelemente 10 b und 10 c eingeschoben.

Mit Abstand oberhalb des mittleren Plattenelements 11 b ist an dem Pfosten ein drittes, oberes Plattenelement 11 c befestigt, welches auch etwa horizontal ausgerichtet ist, aber im Vergleich zu dem mittleren Plattenelement 11 b von dem Pfosten ausgehend zur gegenüberliegenden Seite hin einseitig auskragt. Somit liegt das obere Plattenelement 11 c mit Abstand oberhalb des unteren Plattenelements 11 a, da es zur gleichen Seite hin auskragt. Das obere Plattenelement 11 c ist so an dem Pfosten befestigt, dass es in seinem Endbereich zwischen dem oberen Ende des oberen Pfostenelements 10 c und dem unteren Ende eines Pfostenendelements 10 d aufgenommen ist, das heißt das Plattenelement 11 c ist endseitig zwischen diese beiden Pfostenelemente 10 c und 10 d eingeschoben. Das Pfostenendelement 10 d bildet quasi das Kopfstück des Pfostens, an diesem sind jedoch keine weiteren Plattenelemente befestigt, so dass das Pfostenendelement 10 d in der Regel kürzer sein kann als die anderen Pfostenelemente 10 a, 10 b und 10 c. Außerdem kann es ausreichend sein, wenn man das Kopfstück 10 d einfach auf das obere Pfostenelement 10 c aufsteckt, dabei gegebenenfalls noch über Lamellen 18 positioniert, während eine kraftschlüssige Verbindung über die Gewindestange 12 nicht unbedingt notwendig ist, da das Kopfelement 10 d ja in der Regel nicht lastet wird. Diejenigen Kräfte, die in das obere Plattenelement 11 c eingeleitet werden, werden von dem oberen Pfostenelement 10 c aufgenommen, an dem die Gewindestange 12 zu einen über die Kontermutter 16 befestigt ist, wobei ja außerdem die Gewindestange 12 noch über die Distanzmuffe 13 in dem oberen Pfostenelement 10 c verankert ist.

Der Pfosten des Kratzbaums ist somit segmentartig aus den vier jeweils übereinander liegenden und miteinander fluchtenden Abschnitten, nämlich dem unteren Pfostenelement 10 a, dem mittleren Pfostenelement 10 b, dem oberen Pfostenelement 10 c und dem Pfostenendelement 10 d aufgebaut. Dabei sind alle drei Plattenelemente 11 a , 11 b und 11 c, die die Liegeflächen für die Katze bilden, an dem Pfosten so befestigt, dass dieser die tragenden Kräfte aufnimmt. Da die Plattenelemente wie man sieht vom Pfosten ausgehend jeweils seitlich auskragen, muss der Pfosten nicht unerhebliche Kräfte aufnehmen, wobei man auch bedenken muss, dass die Katze womöglich von einem Plattenelement auf das andere springt, so dass beim Auftreffen die horizontalen Plattenelemente ein erhebliche Belastung erfahren und daher die Verbindung zwischen den Plattenelementen und den Pfostenelementen einerseits und auch diejenige zwischen den einzelnen Pfostenelementen, die die Segmente des Pfostens bilden, sehr stabil sein sollte.

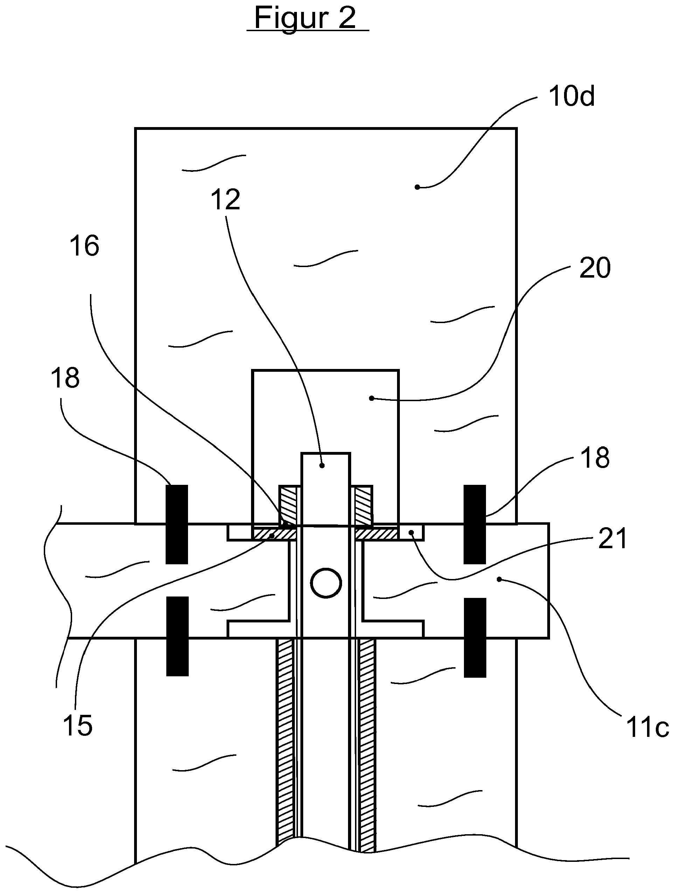

Aus diesem Grunde schlägt die vorliegende Erfindung ein Verbindungssystem vor, welches eine hohe Stabilität der vorgenannten Verbindungen zwischen den Elementen des Kratzbaums gewährleistet und nachfolgend zunächst unter Bezugnahme auf die Figur 2 näher erläutert wird. Man erkennt, dass sich das obere Ende der Gewindestange 12 bis in eine Nut 20 des Pfostenendelements 10 d hinein erstreckt. In dieser Nut 20 liegt eine Kontermutter 16, die auf das obere Ende der Gewindestange 12 aufgeschraubt ist und die als Widerlager an der Unterseite eine Unterlegscheibe 15 verwendet, wobei diese Unterlegscheibe 15 wiederum in einer flachen Nut 21 des oberen Plattenelements 11 c liegt und dort auf dem oberen Plattenelement aufliegt, so dass beim Anziehen der Kontermutter 16 diese gegen die Unterlegscheibe 15 gedrückt und dadurch das obere Plattenelement 11 c an das obere Pfostenelement 10 c angedrückt wird. Außerdem sind insgesamt vier Lamellen 18 vorgesehen, die jeweils in Nuten in dem oberen Plattenelement 11 c, in dem Pfostenendelement 10 d und in dem oberen Pfostenelement 10 c eingreifen und dazu dienen, eine genau fluchtende Ausrichtung des Pfostenelements 10 c und des Pfostenendelements 10 d in einer vorgesehenen Position relativ zu dem oberen Plattenelement 11 c zu gewährleisten.

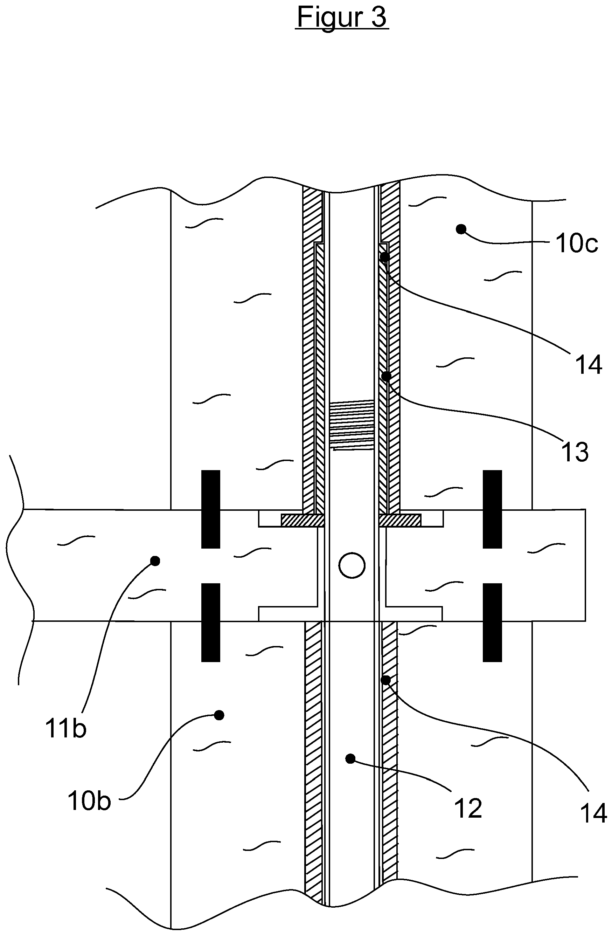

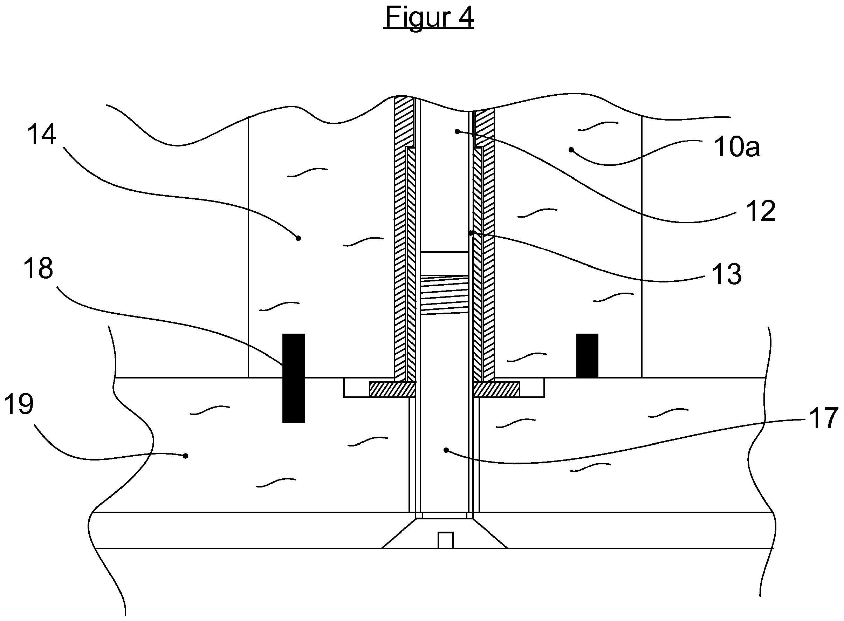

Man erkennt in Figur 2 weiter, dass sich die Gewindestange 12 ausgehend von ihrem oberen Ende durch das obere Plattenelement 11 c hindurch und weiter in Längsrichtung bis in das obere Pfostenelement 10 c hinein erstreckt. Dabei ist die Gewindestange 12 in dem Pfostenelement 10 c in einem Vierkantrohr 14 aufgenommen, welches wiederum in Längsrichtung in dem Pfostenelement 11 c eingelassen ist. In Figur 3, auf die nachfolgend Bezug genommen wird, ist erkennbar, dass sich das Vierkantrohr 14 über die gesamte Länge etwa mittig in dem Pfostenelement 10 c erstreckt. Die Gewindestange 12 wiederum geht innerhalb dieses Vierkantrohrs 14 durch das gesamte obere Pfostenelement 10 c hindurch und erstreckt sich dann weiter nach unten hin auch durch das mittlere Plattenelement 11 b hindurch, aus dem es nach unten austritt und dann in das darunter angeordnete mittlere Pfostenelement 10 a eintritt. Das Gewinderohr 12 geht auch durch das mittlere Pfostenelement 10 b hindurch und auch durch das untere Plattenelement 10 a, wie man in Figur 4 erkennt. Das Gewinderohr 12 geht auch vollständig durch das untere Pfostenelement 10 a hindurch und erstreckt sich bis in das Fußelement 19 hinein.

In Figur 3 erkennt man weiter, dass in einem Teilabschnitt etwa im unteren Bereich des oberen Pfostenelements 10 c die Gewindestange 12 beispielsweise in eine Distanzmuffe 13 mit Innengewinde eingeschraubt ist, welche sich koaxial in dem Vierkantrohr 14 befindet und dort axial unverschiebbar, zum Beispiel über eine Aufnahme mit oberem stirnseitigem Anschlag, festgelegt ist. Dadurch ist die Gewindestange 12 auch in dem oberen Pfostenelement 10 c festgelegt und es entsteht eine stabile Verbindung, wenn die Kontermutter 16 festgeschraubt wird.

Figur 3 zeigt weiterhin, dass das obere Pfostenelement 10 c an seinem unteren Ende mit dem mittleren Plattenelement 11 b verbunden ist und dass sich die Gewindestange durch beide hindurch weiter nach unten hin erstreckt. Die relative Positionierung in Querrichtung zwischen dem oberen Pfostenelement 10 c, dem mittleren Pfostenelement 10 b und dem mittleren Plattenelement 11 b geschieht auch hier wie bereits oben erläutert wurde, über Lamellen 18.

In gleicher Weise wie in dem oberen Pfostenelement 10 c ist, wie sich aus Figur 4 ergibt, die Gewindestange 12 in dem unteren Pfostenelement 10 a in eine Distanzmuffe 13 eingeschraubt, die wieder in einem Vierkantrohr 14 axial unverschiebbar festgelegt ist, wobei außerdem eine Unterlegscheibe 15 vorgesehen ist, die an der Unterseite des unteren Pfostenelements 10 a ein Widerlager hat. Auf diese Weise wird die Gewindestange 12 auch in dem unteren Pfostenelement 10 a kraftschlüssig festgelegt. Allerdings endet die Gewindestange 12 ein Stück vor dem unteren Ende des unteren Pfostenelements 10 a und zur Festlegung des Fußelements 19 an dem unteren Pfostenelement 10 a dient eine Schraube 17, die von der Unterseite her in das Gewinde der Distanzmuffe 13 eingeschraubt wird, in welche von der Oberseite her das untere Ende der Gewindestange 12 eingeschraubt wird. Die Schraube 17 ist somit mit dem gleichen Gewindemaß versehen wie die Gewindestange. Grundsätzlich wäre es alternativ auch möglich, die Gewindestange 12 ganz durch das untere Pfostenelement 10 a und das Fußelement 19 hindurch gehen zu lassen und auch an der Unterseite zu kontern. Die in Figur 4 gezeigte Variante hat sich aber in der Praxis als besonders vorteilhaft erwiesen.

Durch die von unten her durch das plattenförmige Fußelement 19 hindurch und in die Distanzmuffe 13, die in dem unteren Pfostenelement 10 a sitzt, hinein geschraubte Schraube 17 wird beim Anziehen dieser Schraube das plattenförmige Fußelement 19 mit der Unterlegscheibe 15 gegen das untere Ende des unteren Pfostenelements 10 a geschraubt und angedrückt. Andererseits wird bei Festschrauben der Kontermutter 16 am oberen Ende der Gewindestange 12 von oben her eine Zugkraft erzeugt und da das untere Ende der Gewindestange 12 in die Distanzmuffe 13 in dem unteren Pfostenelement 10 a eingeschraubt ist, werden durch diese Zugkraft die drei übereinander stehenden Pfostenelemente 10 a, 10 b und 10 c gegeneinander gedrückt und zu einer stabilen Einheit verbunden. Gleichzeitig werden die jeweils zwischen zwei Pfostenelementen liegenden horizontalen Plattenelemente 11 an die Stirnseiten der Pfostenelemente angepresst, wodurch auch ein guter Verbund zwischen den Plattenelementen und den Pfostenelementen erzielt wird.

Zur Beschwerung und Erhöhung der Standfestigkeit des Bauteils insgesamt kann das Fußelement 19 durch eine Stahlplatte 22, die sich beispielsweise an der Unterseite des Fußelements 19 befindet, verstärkt sein, wobei man mit der Schraube 17 diese Stahlplatte 22 unter das plattenförmige Fußelement 19 schrauben kann. Beispielsweise bietet sich hier die Verwendung einer Senkkopfschraube 17 an, so dass diese an der Unterseite der Stahlplatte 22 nicht aufträgt.

### Bezugszeichenliste

- 10 a: unteres Pfostenelement
- 10 b: mittleres Pfostenelement
- 10 c: oberes Pfostenelement
- 10 d: Pfostenendelement
- 11 a: unteres Plattenelement
- 11 b: mittleres Plattenelement
- 11 c: oberes Plattenelement
- 12: Verbindungsmittel, Gewindestange
- 13: Distanzmuffe
- 14: Rohr, Vierkantrohr
- 15: Unterlegscheibe
- 16: Kontermutter
- 17: Schraube
- 18: Lamellen
- 19: Fußelement, Standfuß
- 20: Nut des Pfostenendelements 10 d
- 21: Nut in dem oberen Plattenelement 11 c
- 22: Stahlplatte

## Patentansprüche

1. Verbindungssystem für Bauteile im Möbel- oder Messebau umfassend wenigstens ein Pfostenelement (10 a), vorzugsweise zwei etwa miteinander fluchtende und miteinander zu verbindende Pfostenelemente (10 a, 10 b) und wenigstens ein mit diesem einen Pfostenelement oder zwei oder mehreren Pfostenelementen (10 a, 10 b) zu verbindendes Plattenelement (11), welches sich etwa orthogonal zu dem(n) Pfostenelement(en) (10 a, 10 b) erstreckt, sowie weiterhin umfassend Verbindungsmittel (12) und Befestigungselemente, geeignet, die wenigstens zwei Pfostenelemente (10 a, 10 b) miteinander und/oder das wenigstens eine Plattenelement (11) mit einem oder mehreren Pfostenelementen (10 a, 10 b) kraftschlüssig zu verbinden, wobei wenigstens ein durchgehendes Verbindungsmittel (12) mit Gewinde sich in Längsrichtung durch wenigstens ein Pfostenelement, vorzugsweise zwei miteinander zu verbindende Pfostenelemente (10 a, 10 b) und wenigstens ein Plattenelement (11) hindurch erstreckt und dabei jeweils in einer Bohrung des oder der Pfostenelemente aufgenommen ist und in wenigstens einem der Pfostenelemente eine auf das durchgehende Verbindungsmittel (12) aufschraubbare Distanzmuffe (13) eingelassen ist, welche stirnseitig im Bereich eines der Plattenelemente (11) ein Widerlager hat, wobei wenigstens eine wenigstens einem der Plattenelemente (11) zugeordnete Unterlegscheibe (15) vorgesehen ist, die an einer Widerlagerfläche des Plattenelements (11) anliegt, **dadurch gekennzeichnet, dass** die Unterlegscheibe (15) in einer Aussparung des Plattenelements (11) aufgenommen ist.

2. Verbindungssystem nach Anspruch 1, **dadurch gekennzeichnet, dass** in einer Bohrung wenigstens eines der Pfostenelemente (10 a, 10 b) ein Rohr, vorzugsweise ein Vierkantrohr (14) aufgenommen ist, welches sich in dem Pfostenelement in Längsrichtung erstreckt, wobei das Rohr das durchgehende Verbindungsmittel (12) aufnimmt.

3. Verbindungssystem nach einem der Ansprüche 1 oder 2, **dadurch gekennzeichnet, dass** endseitig auf eines der Enden des Gewindes des durchgehenden Verbindungsmittels (12) eine Kontermutter (16) aufschraubbar ist.

4. Verbindungssystem nach einem der Ansprüche 1 bis 3, **dadurch gekennzeichnet, dass** in wenigstens einem endseitigen Bereich der Verbindung in das Gewinde einer Distanzmuffe (13) eine Schraube (17) mit Außengewinde einschraubbar ist.

5. Verbindungssystem nach einem der Ansprüche 1 bis 4, **dadurch gekennzeichnet, dass** wenigstens eine Distanzmuffe (13) in einem der Pfostenelemente (10 a, 10 b, 10 c) in Richtung einer durch Kontern des Verbindungsmittels (12) erzeugten Zugkraft axial unverschiebbar festgelegt ist.

6. Verbindungssystem nach einem der Ansprüche 1 bis 5, **dadurch gekennzeichnet, dass** im Bereich der Verbindung wenigstens eines Plattenelements (11) mit wenigstens einem der Pfostenelemente (10 a, 10 b) Lamellen (18) angeordnet sind, welche in eine Nut des Plattenelements (11) und in eine mit dieser fluchtende Nut im stirnseitigen Bereich des Pfostenelements einsteckbar sind und sich etwa in Richtung der Normalen zur Oberfläche des Plattenelements (11) erstrecken.

7. Verbindungssystem nach einem der Ansprüche 1 bis 6, **dadurch gekennzeichnet, dass** das Bauteil wenigstens drei miteinander fluchtende und miteinander zu verbindende Pfostenelemente (10 a, 10 b, 10 c) und wenigstens zwei mit diesen Pfostenelementen zu verbindende Plattenelemente (11 a, 11 b) umfasst, wobei sich die Plattenelemente (11 a, 11 b) jeweils etwa orthogonal zu den Pfostenelementen (10 a, 10 b, 10 c) erstrecken.

8. Verbindungssystem nach einem der Ansprüche 1 bis 7, **dadurch gekennzeichnet, dass** sich wenigstens zwei Plattenelemente (11 a, 11 b) des Bauteils von den Pfostenelementen (10 a, 10 b, 10 c) ausgehend zu gegenüberliegenden Seiten hin erstrecken und an den Pfostenelementen jeweils auskragend angeordnet sind.

9. Verbindungssystem nach einem der Ansprüche 1 bis 8, **dadurch gekennzeichnet, dass** als Verbindungsmittel eine Gewindestange (12) vorgesehen ist, die sich in Längsrichtung durchgehend durch alle miteinander zu verbindenden Pfostenelemente (10 a, 10 b, 10 c) und alle zwischen den Pfostenelementen jeweils angeordneten Plattenelemente (11 a, 11 b) hindurch erstreckt.

10. Möbel- oder Messebauteil umfassend ein Verbindungssystem mit den Merkmalen eines oder mehrerer der Ansprüche 1 bis 9.

11. Möbelbauteil nach Anspruch 10, **dadurch gekennzeichnet, dass** es sich um einen Kratzbaum für Katzen handelt.

## Claims

1. Connecting system for components in the field of furniture or exhibition-stand construction, comprising at least one post element (10 a), preferably two post elements (10 a, 10 b) that are approximately aligned with one another and to be connected to one another, and at least one plate element (11) to be connected to this one post element or two or more post elements (10 a, 10 b), which plate element (11) extends approximately orthogonally to the post element(s) (10 a, 10 b), and further comprising connecting means (12) and fastening elements suitable for connecting the at least two post elements (10a, 10b) to one another and/or the at least one plate element (11) to one or more post elements (10a, 10b) in a force-locked manner, wherein at least one continuous threaded connecting means (12) extends longitudinally through at least one post element, preferably through at least two post elements (10 a, 10 b) to be connected to one another, and at least one plate element (11), and is accommodated in a bore of the post element or elements, and a spacer sleeve (13) that can be screwed onto the continuous connecting means (12) is installed in at least one of the post elements, which spacer sleeve (13) has an abutment on an end side in the area of one of the plate elements (11), wherein at least one washer (15) associated with at least one of the plate elements (11) is provided, which fits against an abutment surface of the plate element (11), **characterized in that** the washer (15) is accommodated in a recess of the plate element (11).

2. The connecting system according to claim 1, **characterized in that** a pipe, preferably a rectangular pipe (14), is accommodated in a bore of at least one of the post elements (10 a, 10 b), which extends longitudinally in the post element, the pipe accommodating the continuous connection means (12).

3. The connecting system according to one of claims 1 or 2, **characterized in that** a lock nut (16) can be screwed onto one of the ends of the thread of the continuous connecting means (12) at one end.

4. The connecting system according to one of claims 1 to 3, **characterized in that** a screw (17) with a male thread can be screwed into the thread of a spacer sleeve (13) in at least an end area of the connection.

5. The connecting system according to one of claims 1 to 4, **characterized in that** at least one spacer sleeve (13) is fixed in one of the post elements (10 a, 10 b, 10 c) so as to be axially immovable in the direction of a tensile force generated by the locking of the connecting means (12).

6. The connecting system according to one of claims 1 to 5, **characterized in that**, in the area of the connection of at least one plate element (11) with at least one of the post elements (10 a, 10 b), slats (18) are arranged, which can be inserted into a groove of the plate element (11) and into a groove aligned therewith in the end area of the post element and which extend approximately in the direction of the normal to the surface of the plate element (11).

7. The connecting system according to one of claims 1 to 6, **characterized in that** the component comprises at least three post elements (10 a, 10 b, 10 c) that are aligned with one another and to be connected to one another and at least two plate elements (11 a, 11 b) to be connected to these post elements, wherein the plate elements (11 a, 11 b) respectively extend approximately orthogonally to the post elements (10 a, 10 b, 10 c).

8. The connecting system according to one of claims 1 to 7, **characterized in that** at least two plate elements (11 a, 11 b) of the component extend from the post elements (10 a, 10 b, 10 c) on opposite sides and are respectively arranged in a cantilevered manner on the post elements.

9. The connecting system according to one of claims 1 to 8, **characterized in that** a threaded rod (12) is provided as connecting means, which extends continuously in the longitudinal direction through all post elements (10 a, 10 b, 10 c) to be connected to one another and all plate elements (11 a, 11 b) respectively arranged between the post elements.

10. Furniture or exhibition-stand component comprising a connecting system with the features of one or more of claims 1 to 9.

11. Furniture component according to claim 10, **characterized in that** it is a scratching post for cats.

## Revendications

1. Système d'assemblage pour des éléments constitutifs dans la fabrication de mobilier ou de stands d'exposition comprenant au moins un élément en poteau (10 a), de préférence deux éléments en poteaux (10 a, 10 b) alignés l'un sur l'autre et destinés à être assemblés l'un avec l'autre et au moins un élément en forme de plaque (11) destiné à être assemblé avec ledit un élément en poteau ou avec deux éléments en poteaux (10 a, 10 b) ou plus, lequel s'étend sensiblement de forme orthogonale par rapport à l'élément, aux éléments en poteau(x) (10 a, 10 b), et comprenant par ailleurs des éléments d'assemblage (12) et des éléments de fixation, adaptés pour assembler ensemble par complémentarité de force les au moins deux éléments en poteaux (10 a, 10 b) et/ou l'au moins un élément en forme de plaque (11) avec un ou plusieurs éléments en poteaux (10 a, 10 b), au moins un élément d'assemblage (12) continu pourvu d'un filetage s'étendant dans la direction longitudinale à travers au moins un élément en poteau, de préférence deux éléments en poteau (10 a, 10 b) qui doivent être assemblés l'un à l'autre et au moins un élément en forme de plaque (11) et étant logé à cet effet dans respectivement un perçage du ou des éléments en poteaux et étant incorporé à cet effet dans au moins l'un des éléments en poteaux et dans au moins l'un des éléments d'assemblage (12) étant incorporé un manchon d'écartement (13) susceptible d'être vissé sur l'élément d'assemblage (12) continu, lequel possède en face frontale dans la zone de l'un des éléments en forme de plaque (11) une butée, au moins une rondelle (15) associée aux éléments en forme de plaques (11) étant prévue, qui est adjacente à une surface de butée de l'élément en forme de plaque (11),
**caractérisé en ce que** la rondelle (15) est réceptionnée dans une encoche de l'élément en forme de plaque (11).

2. Système d'assemblage selon la revendication 1, **caractérisé en ce que** dans un perçage d'au moins l'un des éléments en poteau (10 a, 10 b) est réceptionné un tube, de préférence un tube carré (14), lequel s'étant en direction longitudinale dans l'élément en poteau, le tube réceptionnant l'élément d'assemblage (12) continu.

3. Système d'assemblage selon l'une quelconque des revendications 1 ou 2, **caractérisé en ce que** sur la face extrême de l'une des extrémités du filetage de l'élément d'assemblage (12) continu est susceptible d'être vissé un contre-écrou (16).

4. Système d'assemblage selon l'une quelconque des revendications 1 à 3, **caractérisé en ce que** dans au moins une zone d'extrémité de l'assemblage, dans le taraudage d'un manchon d'écartement (13) est susceptible d'être vissée une vis (17) à filetage extérieur.

5. Système d'assemblage selon l'une quelconque des revendications 1 à 4, **caractérisé en ce qu'**au moins un manchon d'écartement (13) est immobilisé dans l'un des éléments en poteau (10 a, 10 b, 10 c) en étant indéplaçable axialement dans la direction d'une force de traction générée par blocage du moyen d'assemblage (12) .

6. Système d'assemblage selon l'une quelconque des revendications 1 à 5, **caractérisé en ce que** dans la zone d'assemblage d'au moins un élément en forme de plaque (11) avec au moins l'un des éléments en poteau (10 a, 10 b) sont placées des lamelles (18), lesquelles sont enfichables dans une rainure de l'élément en forme de plaque (11) et dans une rainure en alignement sur celle-ci, dans la zone frontale de l'élément en poteau et s'étendent approximativement dans la direction de la normale de la surface de l'élément en forme de plaque (11).

7. Système d'assemblage selon l'une quelconque des revendications 1 à 6, **caractérisé en ce que** l'élément constitutif comprend au moins trois éléments en poteau (10 a, 10 b, 10 c) alignés l'un sur l'autre et destinés à être assemblés l'un avec l'autre et au moins deux éléments en forme de plaques (11 a, 11 b) destinés à être assemblés avec lesdits éléments en poteaux, les éléments en forme de plaques (11 a, 11 b) s'étendant respectivement approximativement à l'orthogonale des éléments en poteaux (10 a, 10 b, 10 c) .

8. Système d'assemblage selon l'une quelconque des revendications 1 à 7, **caractérisé en ce qu'**au moins deux éléments en forme de plaques (11 a, 11 b) de l'élément constitutif s'étendent en partant des éléments en poteaux (10 a, 10 b, 10 c) vers des côtés opposés et sont placés respectivement en débordant des éléments en poteaux.

9. Système d'assemblage selon l'une quelconque des revendications 1 à 8, **caractérisé en ce qu'**en tant qu'élément d'assemblage est prévue une barre filetée (12) qui s'étend en continu dans la direction longitudinale à travers tous les éléments en poteau (10 a, 10 b, 10 c) qui doivent être assemblés ensemble et à travers tous les éléments en forme de plaques (11 a, 11 b) respectivement placés entre les éléments en poteaux.

10. Élément constitutif de mobilier ou dans stand d'exposition, comprenant un système d'assemblage présentant les caractéristiques de l'une ou de plusieurs des revendications 1 à 9.

11. Élément constitutif de mobilier selon la revendication 10, **caractérisé en ce qu'**il s'agit d'un arbre à chats.
